(19) Europäisches Patentamt
European Patent Office
Office européen des brevets

(11) **EP 0 767 505 B1**

(12) # EUROPEAN PATENT SPECIFICATION

(45) Date of publication and mention
of the grant of the patent:
**12.05.1999 Bulletin 1999/19**

(51) Int Cl.⁶: **H01M 4/58**, H01M 10/40

(21) Application number: **96307181.6**

(22) Date of filing: **01.10.1996**

(54) **Carbonaceous electrode material for secondary battery and process for production thereof**

Elektrodenmaterial aus Kohlenstoff für Sekundärbatterie und Verfahren zu seiner Herstellung

Matériau d'électrode carboné pour unepile secondaire et procédé pour la production de celui-ci

(84) Designated Contracting States:
**DE FR GB NL**

(30) Priority: **03.10.1995 JP 278261/95**

(43) Date of publication of application:
**09.04.1997 Bulletin 1997/15**

(73) Proprietor: **KUREHA KAGAKU KOGYO
KABUSHIKI KAISHA
Chuo-ku Tokyo 103 (JP)**

(72) Inventors:
- **Sonobe, Naohiro, c/o Kureha Kagaku Kogyo K.K.
Tokyo 103 (JP)**
- **Masuko, Jiro, c/o Kureha Kagaku Kogyo K.K.
Tokyo 103 (JP)**
- **Aita, Tomoyuki, c/o Kureha Kagaku Kogyo K.K.
Tokyo 103 (JP)**

- **Ishikawa, Minoru,
c/o Kureha Kagaku Kogyo K.K.
Tokyo 103 (JP)**

(74) Representative: **Kyle, Diana
Elkington and Fife
Prospect House
8 Pembroke Road
Sevenoaks, Kent TN13 1XR (GB)**

(56) References cited:
**EP-A- 0 561 372        EP-A- 0 613 197
EP-A- 0 700 105        US-A- 5 082 594**

- **PATENT ABSTRACTS OF JAPAN vol. 013, no.
433 (E-824), 27 September 1989 & JP-A-01
161677 (MITSUBISHI PETROCHEM CO
LTD;OTHERS: 01), 26 June 1989,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION AND RELATED ART

The present invention relates to a carbonaceous material obtained by carbonizing an organic material of plant origin and suitable as an electrode material for a non-aqueous solvent-type secondary battery, and a process for production thereof. The present invention also relates to an electrode structure comprising such a carbonaceous electrode material, and a non-aqueous solvent-type secondary battery having such an electrode structure.

Non-aqueous solvent-type lithium secondary batteries having a negative electrode comprising a carbonaceous material have been proposed (Japanese Laid-Open Patent Application (JP-A) 62-90863, JP-A 62-122066, etc.). Such a secondary battery utilizes a phenomenon that a carbon intercalation compound of lithium as a (cell) active substance is easily formed electrochemically. When the battery is charged, lithium in a positive electrode comprising a chalcogenide, such as $LiCoO_2$, is introduced between layers of negative electrode carbon (i.e., dopes the carbon) electrochemically. The carbon thus doped with lithium functions as a lithium electrode, from which the lithium is released (i.e., de-doped) during discharge to return to the positive electrode. Thus, a secondary battery capable of repetitive charge-discharge is formed.

As carbonaceous materials capable of providing non-aqueous solvent-type lithium secondary batteries of high energy density, there have been known so-called "hard carbon" obtained by calcining phenolic resin or furan resin at a relatively low temperature (e.g., ca. 800 - 1500 °C), so-called "soft carbon" obtained by carbonizing pitch or tar; and activated carbon having a large specific surface area on the order of 900 - 2000 $m^2$/g.

However, the above-mentioned known carbonaceous materials are accompanied with a problem that a large amount of active substance, such as lithium, remains in the carbon (i.e., the carbon shows a large non-dedoping capacity) during the dedoping step, so that the active substance is wasted uselessly, and also a problem that the dedoping capacity per se determining the battery performance (discharge capacity) is relatively small.

SUMMARY OF THE INVENTION

In the course of our study for obtaining high-performance carbonaceous electrode materials more suitably used for non-aqueous solvent-type secondary batteries, we have examined organic materials of plant origin characterized by the presence of vessel, sieve tube, plant fiber, etc., as new carbon sources. As a result, it has been unexpectedly found that the carbonization of such an organic material of plant origin under appropriate conditions provides an excellent carbonaceous electrode material having well-balanced performances including a small non-dedoping capacity and a large dedoping capacity in combination, and the resultant carbonaceous material has a large pore volume suitable for doping with a cell active substance not found in conventional carbonaceous electrode materials.

Thus, a principal object of the present invention is to provide such a carbonaceous electrode material having well-balanced high performances as described above, a process for producing such a carbonaceous material, and also a non-aqueous solvent-type secondary battery having an electrode comprising such a carbonaceous material.

Another object of the present invention is to provide a carbonaceous material having advantageous features in production thereof, such as easy pulverization by means of a jet mill, etc., and easy handling of feedstock for calcination.

According to the present invention, there is provided a carbonaceous electrode material for a non-aqueous solvent-type secondary battery, obtained by carbonizing an organic material of plant origin, and having a pore volume of at least 0.55 ml/g of pores having a pore diameter of at most 5 pm as measured by mercury injection and a specific surface area of at most 100 $m^2$/g as measured by the nitrogen adsorption BET method.

The carbonaceous material may preferably be a non-graphitic material as represented by an average (002)-plane spacing of at least 0.365 nm as measured by X-ray diffraction method.

According to another aspect of the present invention, there is provided a process for producing a carbonaceous electrode material for a non-aqueous solvent-type secondary battery, comprising:
carbonizing an organic material of plant origin in contact with a flowing inert gas at a temperature of 700 - 1500 °C under a pressure exceeding 10 kPa (ca. 0.1 atm).

According to another aspect of the present invention, there is provided an electrode structure for a non-aqueous solvent-type secondary battery, comprising: an electroconductive substrate and a composite electrode layer disposed on at least one surface of the electroconductive substrate; the composite electrode layer comprising a carbonaceous electrode material as described above in a particulate form, and a binder.

According to a further aspect of the present invention, there is provided a non-aqueous solvent-type secondary battery, comprising, a positive electrode, a negative electrode, and a separator and a non-aqueous electrolytic solution disposed between the positive and negative electrodes; at least one of the positive and negative electrodes comprising an electrode structure as described above.

The carbonaceous material according to the present invention is practically so-called non-graphitizable carbon capable of storing a large amount of active substance and accordingly has an essentially large capacity for doping with an active substance. In addition, the carbonaceous material according to the present invention has many pores of a relatively large diameter represented by a pore volume of at least 0.55 ml/g of pores having a pore diameter of at most 5 μm as measured by mercury injection method and is characterized by relatively large penetrating or open pores originated from structures, such as vessel, sieve tube and plant fiber, attributable to the starting material.

Accordingly, the electrolytic solution is allowed to easily penetrate into the interior of the carbon through pores, and the active substance is allowed to easily move between the inside and outside of the carbon. As a result, it is possible to provide a carbonaceous electrode material having a small non-dedoping capacity and capable of effectively utilizing an active substance.

We have already proposed a carbonaceous electrode material for a non-aqueous solvent-type secondary battery obtained by carbonizing coconut shell at a temperature of 900 - 1500 °C under a reduced pressure of at most 10 kPa (EP-A 0,700,105). We have now found that organic material of plant origin shell can provide an excellent carbonaceous electrode material for a non-aqueous solvent-type secondary battery if treated under appropriate carbonization conditions, and the excellent performance thereof is attributable to its pore structure originated from natural plant materials.

These and other objects, features and advantages of the present invention will become more apparent upon a consideration of the following description of the preferred embodiments of the present invention taken in conjunction with the accompanying drawing.

## BRIEF DESCRIPTION OF THE DRAWING

Figure 1 is a partially exploded perspective view of a non-aqueous solvent-type secondary battery which can be constituted according to the invention.

Figure 2 is a partial sectional view of an electrode structure adopted in the secondary battery.

## DETAILED DESCRIPTION OF THE INVENTION

The carbonaceous material according to the present invention is characterized by a specific surface area of at most 100 $m^2$/g as measured by the BET method using nitrogen as adsorbate gas, and a pore volume of at least 0.55 ml/g of pores having a diameter of at most 5 μm as measured by mercury injection method. A carbonaceous material having a specific surface area in excess of 100 $m^2$/g as represented by activated carbon or a carbonaceous material having a pore volume below 0.55 ml/g provides a large non-dedoping capacity, i.e., a large amount of active substance left within the carbonaceous material without dedoping. The specific surface area may preferably be 0.5 - 10 $m^2$/g, more preferably 0.5 - 5 $m^2$/g.

The large pore volume is a characteristic of the carbonaceous material. A smaller pore volume makes it difficult for the electrolytic solution to penetrate into the inside of the carbon and hinders free movement of the active substance within the carbonaceous material, thereby resulting in a remarkable increase in non-dedoping capacity defined as a difference (A-B) between a doping capacity (A) and a dedoping capacity (B) and a lowering in rate of effective utilization of active substance. On the other hand, an extremely large pore volume results in a lowering in packing density of the carbonaceous material for preparing a secondary battery.
Accordingly, the pore volume may preferably be 0.55 - 1.00 ml/g, further preferably 0.55 - 0.70 ml/g.

The carbonaceous material according to the present invention having a developed pore structure has a characteristic that it is readily pulverized and causes little wearing of a pulverizer, such as a jet mill. Further, as for micropores relating to the production process described hereinafter, the characteristic micropore and fibrous structures of an organic material of plant origin are believed to allow easy dissipation or removal of a decomposition byproduct formed during the carbonization, and contribute to an increased pore volume in the finally obtained carbonaceous material.

In the present invention, the carbonaceous material should be construed as a term covering a graphitic material having a developed graphite structure as obtained through heat treatment at a temperature of 2000 °C or higher. However, a high-temperature heat treatment causes a shrinkage of carbon structure and is liable to deprive the pore structures, such as vessel, sieve tube and plant fiber, originated from the starting material.
Accordingly, the carbonaceous material according to the present invention is practically advantageously realized as a non-graphitic carbonaceous material having an average (002)-plane spacing as measured by X-ray diffraction method (hereinafter sometimes denoted by "$d_{002}$") of at least 0.365 nm. $d_{002}$ is more preferably 0.365 - 0.390 nm, further preferably 0.370 - 0.390 nm. If $d_{002}$ is below 0.365 nm, the carbonaceous material is liable to exhibit a small capacity for doping with active substance.

The carbonaceous material may preferably have a hydrogen-to-carbon atomic ratio H/C of at most 0.1. A carbonaceous material having an H/C exceeding 0.1 is insufficient in carbonization and is not suitable as a carbonaceous electrode material for a non-aqueous solvent-type secondary battery.

Now, the process for producing a carbonaceous material according to the present invention will be described.

The production process according to the present invention comprises: carbonizing an organic material of plant origin in contact with a flowing inert gas at a temperature of 700 - 1500 °C under a pressure exceeding 10 kPa (first process).

Preferred examples of the organic material of plant origin used in the present invention as carbon sources of the carbonaceous material may generally include: coconut shell, coffee bean, chaffs, broadleaf tree wood, conifer wood, and bamboo.

The carbonization may preferably be performed while taking care so that tar or decomposition products, such as hydrogen and methane, will not hinder the pore formation in the organic material. In case where the organic material is carbonized in an environment rich or dense in decomposition product, the formation of minute pores is liable to be insufficient, thus resulting in a carbonaceous material having a lower capacity for doping with active substance.

As the organic material of plant origin is inherently porous because of the presence of vessel, sieve tube, etc., the dissipation or removal of decomposition products during the carbonization is facilitated to result in a large volume of pores having a relatively large diameter.

According to the first production process of the present invention, the organic material is carbonized while flowing an inert gas in contact with the organic material under a pressure of atmospheric pressure (1 atm = ca. 100 kPa) or higher, or a subatmospheric pressure exceeding 10 kPa (ca. 0.1 atm). In this instance, the material to be carbonized (organic material as it is or after pre-calcination as desired) may be disposed in a piled layer within a reactor and is carbonized while flowing the inert gas in a space outside but in contact with the layer (outside-layer flow scheme), or the material to be carbonized (organic material) is disposed in a layer or bed and is carbonized while flowing the inert gas through within the layer or bed (intra-layer flow scheme).

In a batch-wise outside-layer flow scheme, it is preferred to suppress the piled layer thickness of the material to be carbonized as thin as possible so as to increase the area of contact of the material layer with the inert gas and allow quick removal of the decomposition product from the material out of the system. The piled layer thickness of the material to be carbonized may preferably be at most 50 mm, more preferably at most 30 mm. The inert gas may be supplied or flowed at a vacant reactor-basis speed of at least 1 mm/sec, more preferably at least 5 mm/sec.

It is preferred to adopt an intra-layer flow scheme of a continuous-type or a batch-type using a fluidized bed, a fixed bed, etc. In this case, the inert gas may preferably be supplied or flowed at a rate of at least 10 ml/min., more preferably at least 50 ml/min., further preferably at least 100 ml/min., per gram of the material to be carbonized, while it can depend on the amount of the material to be carbonized per unit time. A higher inert gas supply rate may be preferred in view of the properties of the product carbonaceous material, but practically the supply rate may be at most 500 ml/min. per gram of the material to be carbonized.

In the production process, the inert gas may preferably be nitrogen or argon, and the above-mentioned inert gas supply rate is calculated based on the volume of the inert gas under the standard state (0 °C and 1 atm). The inert gas can contain up to 40 mol. % of halogen gas, such as chlorine.

The carbonization may be performed at a temperature of 700 - 1500 °C. Carbonization at a temperature below 700 °C results in an increased non-dedoping active substance capacity of the product carbonaceous material. Carbonization at a temperature higher than 1500 °C results in a decrease in capacity for doping with active substance. The carbonization temperature is 700 - 1500 °C, preferably 1000 - 1400 °C, further preferably 1100 - 1400 °C.

The organic material of plant origin may preferably be subjected to pre-calcination at 300 - 1000 °C in an inert gas atmosphere or under a reduced pressure so as to remove tar and other volatile matters in advance. Further, it is preferred to pulverize the pre-calcined organic material into fine particles of at most 100 pm in average diameter so as to promote the dissipation of decomposition products generated from the material to be carbonized during the carbonization.

The pre-calcined organic material before carbonization shows a lower hardness than the carbonaceous material after the final carbonization, thus being easily pulverized. Accordingly, in case of requiring a powder carbonaceous electrode material, pulverization after the pre-calcination is accompanied with less abrasion of the pulverizer, and is advantageous from the viewpoint of production process.

Next, the non-aqueous solvent-type secondary battery of the present invention will be described.

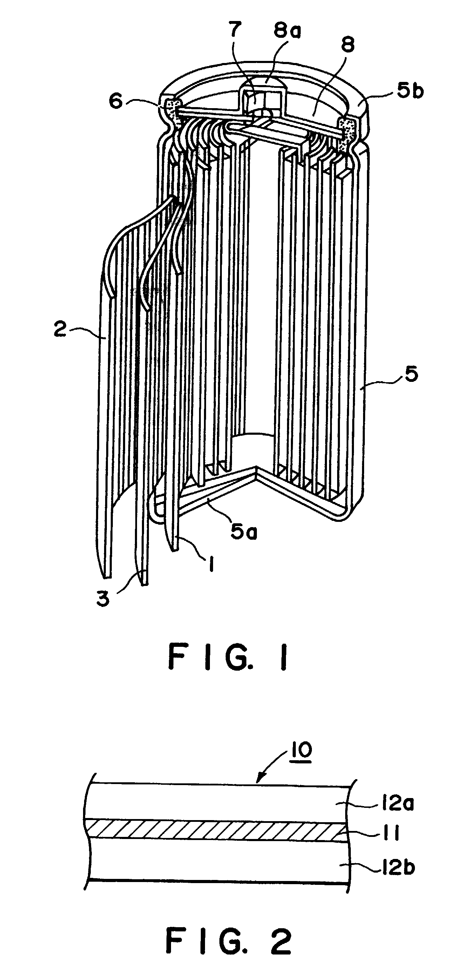

Figure 1 is a partially exploded perspective view of a lithium secondary battery as an embodiment of a non-aqueous solvent-type secondary battery according to the present invention.

More specifically, the secondary battery basically includes a laminate structure including a positive electrode 1, a negative electrode 2 and a separator 3 disposed between the positive and negative electrodes 1 and 2 and comprising a fine porous film of a polymeric material, such as polyethylene or polypropylene, impregnated with an electrolytic solution. The laminate structure is wound in a vortex shape to form an electricity-generating element which is housed within a metal casing 5 having a bottom constituting a negative electrode terminal 5a. In the secondary battery, the negative electrode 2 is electrically connected to the negative electrode terminal 5a, and the uppermost portion of the battery is constituted by disposing a gasket 6 and a safety valve 7 covered with a top plate 8 having a projection constituting a positive electrode terminal 8a electrically connected to the positive electrode. Further, the uppermost rim 5b of the casing 5 is crimped toward the inner side to form an entirely sealed cell structure enclosing the electricity-generating element.

Herein, the positive electrode 1 or negative electrode 2 may be constituted by an electrode structure 10 having a sectional structure as partially shown in Figure 2. More specifically, the electrode structure 10 includes an electroconductive substrate 11 comprising a foil or wire net of a metal, such as iron, stainless steel, copper, aluminum, nickel or titanium and having a thickness of, e.g., 5 - 100 µm, or 5 - 20 µm for a small-sized battery, and a composite electrode layer (12a, 12b) of, e.g., 10 - 1000 µm, preferably 10 - 200 µm, in thickness for a small-sized battery, on at least one surface, preferably on both surfaces as shown in Figure 2, of the electroconductive substrate 11.

The composite electrode layers 12a and 12b are respectively a layer comprising a particulate carbonaceous material according to the present invention, an electroconductive material such as electroconductive carbon, optionally included, and a binder such as a vinylidene fluoride resin.

More specifically, in case of using the carbonaceous material according to the present invention for producing an electrode 10 (1 or 2) of a non-aqueous solvent-type secondary battery as described above, the carbonaceous material may be optionally formed into fine particles having an average particle size of 5 - 100 µm and then mixed with a binder stable against a non-aqueous solvent, such as polyvinylidene fluoride, polytetrafluoroethylene or polyethylene, to be applied onto an electroconductive substrate 11, such as a circular or rectangular metal plate, to form, e.g., a 10 - 200 µm-thick layer. The binder may preferably be added in a proportion of 1 - 20 wt. % of the carbonaceous material. If the amount of the binder is excessive, the resultant electrode is liable to have too large an electric resistance and provide the battery with a large internal resistance. On the other hand, if the amount of the binder is too small, the adhesion of the carbonaceous material particles with each other and with the electroconductive substrate 11 is liable to be insufficient. The above described formulation and values have been set forth with respect to production of a secondary battery of a relatively small size, whereas, for production of a secondary battery of a larger size, it is also possible to form the above-mentioned mixture of the carbonaceous material fine particles and the binder into a thicker shaped product, e.g., by press-forming, and electrically connect the shaped product to the electroconductive substrate.

The carbonaceous material of the present invention can also be used as a positive electrode material for a non-aqueous solvent-type secondary battery by utilizing its good doping characteristic but may preferably be used as a negative electrode material of a non-aqueous solvent-type secondary battery, particularly for constituting a negative electrode to be doped with lithium as an active substance of a lithium secondary battery.

In the latter case, the positive electrode material may comprise a complex metal chalcogenide, particularly a complex metal oxide, such as $LiCoO_2$, $LiNiO_2$ or $LiMn_2O_4$. Such a positive electrode material may be formed alone or in combination with an appropriate binder into a layer on an electroconductive substrate.

The non-aqueous solvent-type electrolytic solution used in combination with the positive electrode and the negative electrode described above may generally be formed by dissolving an electrolyte in a non-aqueous solvent. The non-aqueous solvent may comprise one or two or more species of organic solvents, such as propylene carbonate, ethylene carbonate, dimethyl carbonate, diethyl carbonate, dimethoxyethane, diethoxyethane, $\gamma$-butyrolactone, tetrahydrofuran, 2-methyl-tetrahydrofuran, sulfolane, and 1,3-dioxolane. Examples of the electrolyte may include $LiClO_4$, $LiPF_6$, $LiBF_4$, $LiCF_3SO_3$, $LiAsF_6$, LiCl, LiBr, $LiB(C_6H_5)_4$, and $LiN(SO_2CF_3)_2$.

As described above, a secondary battery of the present invention may generally be formed by disposing the above-formed positive electrode 1 and negative electrode 2 opposite to each other, optionally with a liquid-permeable separator 3 composed of, e.g., unwoven cloth or other porous materials, disposed therebetween, and dipping the positive and negative electrodes together with an intermediate permeable separator in an electrolytic solution as described above.

In the above, a cylindrical battery has been described as an embodiment of the non-aqueous solvent-type secondary battery according to the present invention. However, the non-aqueous solvent-type secondary battery according to the present invention can basically have any other shapes, such as those of a coin, a rectangular parallelepiped, or a paper or sheet.

Incidentally, the measurement of various parameters of carbonaceous materials described herein, i.e., the pore volume by mercury injection method, the specific surface area by nitrogen adsorption, $d_{002}$ and the hydrogen/carbon atomic ratio (H/C), was performed in the following manner.

[Pore volume by mercury injection method]

In case where mercury is injected (pressurized) into a cylindrical pore having a diameter D under a pressure P, the following equation is given based on a balance between a surface tension and a pressure acting on a sectional area of the pore:

$$-\pi D\gamma\cdot\cos\theta = \pi(D/2)^2 P,$$

wherein $\gamma$ represents a surface tension of the mercury, and $\theta$ denotes a contact angle between the mercury and the pore well. Accordingly,

$$D = (-4\gamma\cdot\cos\theta)/P.$$

Herein, the surface tension ($\gamma$) of mercury was assumed to be 484 dyn/cm, the contact angle ($\theta$) between mercury and carbon was assumed to be 130 deg; and the pressure P and the diameter D were expressed in the units of MPa and $\mu$m, respectively, whereby the above equation was reduced to

$$D = 1.27/P.$$

Based on the formula, a relationship between the pore diameter (D) and the mercury pressure P was derived.
More specifically, the pore volume was measured by "AUTOPORE 9200" (available from Micromeritics Instrument Corp.) in the following manner.
A sample carbonaceous material in the form of particles having an average diameter of 10 - 30 $\mu$m was placed in a sample vessel, which was then evacuated for 30 min. at room temperature and a pressure of at most 2.67 Pa. Then, mercury was introduced into the sample vessel and gradually injected into pores under a gradually increasing pressure (up to a maximum pressure of 414 MPa). From the measurement, a relationship between pressure P and injected volume of mercury was derived and converted into a relationship between pore diameter D and the injected volume. From the relationship, a pore volume distribution was derived versus pore diameter as a variant. Thus, the volume of mercury injected from a pressure (0.25 MPa) corresponding to a pore diameter of 5 $\mu$m to the maximum pressure (414 MPa; corresponding to a pore diameter of 3 nm) was measured as a pore volume of pores having a diameter of at most 5 $\mu$m.

[Specific surface area by nitrogen adsorption]

An approximate equation

$$v_m = 1/(v\cdot(1-x))$$

derived from the BET equation was used to obtain $v_m$ (amount ($cm^3$/g-sample)) of adsorbed nitrogen required to form a mono-molecular layer of nitrogen on the sample surface) from a measured nitrogen volume v at a relative pressure x (= 0.3) according to the BET single-point method using nitrogen adsorption. From the thus-obtained $v_m$-value, a specific surface area $S_{BET}$ was calculated based on the following equation:

$$S_{BET} = 4.35 \times v_m \ (m^2/g).$$

More specifically, the nitrogen adsorption onto a carbonaceous material was performed at liquid nitrogen temperature by using "Flow Sorb II 2300" (available from Micromeritics Instrument Corp.) in the following manner.
A sample carbonaceous material pulverized into an average diameter of 5 - 50 $\mu$m was packed in a sample tube, and the sample tube was cooled to -196 °C while flowing helium gas containing nitrogen at a concentration of 30 mol. %, thereby to cause the carbonaceous material to adsorb nitrogen. Then, the sample tube was restored to room temperature to measure the amount of nitrogen desorbed from the sample by a thermal conductivity-type detector, thereby to obtain the adsorbed nitrogen amount v ($cm^3$/g-sample).

[$d_{002}$ of carbonaceous material]

A powdery sample of a carbonaceous material was packed in an aluminum-made sample cell and irradiated with monochromatic CuK$\alpha$ rays (wavelength $\lambda = 0.15418$ nm) through a graphite monochromator to obtain an X-ray diffraction pattern. The peak position of the diffraction pattern is determined by the center of gravity method (i.e., a method wherein the position of a gravity center of diffraction lines is obtained to determine a peak position as a 2$\theta$

value corresponding to the gravity center) and calibrated by the diffraction peak of (111) plane of high-purity silicon powder as the standard substance. The $d_{002}$ value is calculated from the Bragg's formula shown below.

$$d_{002} = \lambda/(2 \cdot \sin\theta) \qquad \text{(Bragg's formula)}$$

[Hydrogen/carbon (H/C) atomic ratio]

A sample of carbonaceous material was subjected to elementary analysis by using a CNH analyzer, and a hydrogen/carbon(H/C) atomic ratio was calculated as a ratio of numbers of atoms of hydrogen/carbon based on the weight proportions of hydrogen and carbon in the sample.

[Examples]

Hereinbelow, the present invention will be described more specifically based on Examples and Comparative Examples. All the volumes or flow rates of inert gases described hereinafter are values calculated under the standard state (0 °C, 1 atm).

Example 1

Coconut shell char (available from M.C. Carbon K.K.) was heated to 600 °C and held at 600 °C for 1 hour in a nitrogen gas atmosphere (normal pressure) to be pre-calcined, whereby a carbon precursor having a volatile content of at most 2 %. The carbon precursor was pulverized into a powdery carbon precursor having an average particle size (diameter) of 25 μm. Then, 20 g of the carbon precursor was piled in a ca. 2 mm-thick layer in an alumina-made boat and then placed in a horizontal tubular furnace of 100 mm in diameter to be heated to 1200 °C at a temperature-raising rate of 250 °C/hr and held for 1 hour at 1200 °C for carbonization while flowing nitrogen gas at a rate of 10 liter/min.
The properties of the resultant carbonaceous material are shown in Table 1 appearing hereinafter together with those of other Examples and Comparative Examples.

Example 2

A carbonaceous material was prepared in the same manner as in Example 1 except that the carbonization temperature was changed to 1300 °C.

Example 3

A carbonaceous material was prepared in the same manner as in Example 1 except that the nitrogen flow rate during the carbonization was decreased to 1 liter/min.

Example 4

Milled and extracted coffee bean (produce of Brazil) in particle size of 2 - 3 mm was dried at 120 °C for 1 hour and then pre-calcined by heating up to 600 °C and holding at 600 °C for 1 hour in a nitrogen atmosphere (normal pressure), followed by pulverization into a powdery carbon precursor having an average particle size of 25 μm. The carbon precursor was carbonized in the same manner as in Example 1.

Example 5

Milled and extracted coffee bean (produce of Brazil) in particle size of 2 - 3 mm was dried at 120 °C for 1 hour and then pre-calcined by heating up to 600 °C and holding at 600 °C for 1 hour in a nitrogen atmosphere (normal pressure), followed by pulverization into a powdery carbon precursor having an average particle size of 25 μm.
Then, 30 g of the powdery carbon precursor was placed on a porous filter plate disposed at a middle of a reaction tube of a vertical tubular furnace (diameter = 50 mm) and heated at a rate of 250 °C/hour while supplying nitrogen gas downward at a rate of 2400 ml/min from an upper part of the reaction tube. When the furnace temperature reached 1100 °C, the temperature was retained for 1 hour to effect carbonization while keeping the nitrogen supply rate. After cooling, a carbonaceous material was recovered.

Example 6

A carbonaceous material was prepared in the same manner as in Example 5 except that the nitrogen gas was supplied upward from a lower part of the reaction tube and the nitrogen gas supply rate was decreased to 100 ml/min.

Comparative Example 1

A phenolic resin ("Bellpearl C-800", available from Kanebo K.K.) was pre-cured at 170 °C for 3 min., and then cured at 130 °C for 8 hours, followed by pulverization into an average particle size of 25 μm. Then, 20 g of the pulverizate was placed in a horizontal tubular furnace identical to the one used in Example 1 and carbonized by heating up to 1200 °C at a rate of 250 °C/hr, holding at 1200 °C for 1 hour and cooling, while flowing nitrogen gas at a rate of 10 liter/min., whereby a phenolic resin-calcined carbon was prepared.

Comparative Example 2

A furan resin ("Hitafuran VF-303", available from Hitachi Kasei K.K.) was cured at 100 °C for 14 hours, followed by pulverization into an average particle size of 25 μm. Then, 20 g of the pulverizate was placed in a horizontal tubular furnace identical to the one used in Example 1 and carbonized by heating up to 1200 °C at a rate of 250 °C/hr, holding at 1200 °C for 1 hour and cooling, while flowing nitrogen gas at a rate of 10 liter/min., whereby a furan resin-calcined carbon was prepared.

Comparative Example 3

A petroleum pitch having a softening point of 210 °C, a quinoline-insoluble content of 1 wt. % and an H/C atomic ratio of 0.63 was pre-calcined by heating up to 600 °C and holding at 600 °C for 1 hour in a nitrogen gas atmosphere (normal pressure), followed by pulverization into a powdery carbon precursor having an average particle size of 20 μm. The carbon precursor was carbonized at 1200 °C for 1 hour under a reduced pressure of 0.01 - 0.03 Pa to prepare a carbonaceous material.

Comparative Example 4

Coconut shell-based activated carbon (available from Kuraray Chemical K.K.) was pulverized to an average particle size of 25 μm and treated at 1200 °C for 1 hour in a nitrogen atmosphere, to prepare a carbonaceous material.

The properties of the carbonaceous materials prepared in the above Examples and Comparative Examples are inclusively shown in Table 1 appearing hereinafter.

[Doping/de-doping capacity for active substance]

The carbonaceous materials obtained in Examples and Comparative Examples were respectively used to prepare a non-aqueous solvent-type secondary battery (cell) and the performances thereof were evaluated in the following manner.

The carbonaceous material is generally suited for constituting a negative electrode of a non-aqueous solvent secondary battery. However, in order to accurately evaluate the performances of a carbonaceous material inclusive of a doping capacity (A) and a de-doping capacity (B) and also a non-dedoping capacity (A-B) for a cell active substance without being affected by a fluctuation in performance of a counter electrode material, a large excess amount of lithium metal showing a stable performance was used as a negative electrode, and each carbonaceous material prepared above was used to constitute a positive electrode, thereby forming a lithium secondary battery, of which the performances were evaluated.

More specifically, the positive electrode was prepared as follows. That is, 90 wt. parts of the carbonaceous material thus formulated in the form of fine particles and 10 wt. parts of polyvinylidene fluoride were mixed together with N-methyl-2-pyrrolidone to form a paste composite, which was then applied uniformly onto a copper foil. The composite, after being dried, was peeled off the copper foil and stamped into a 21 mm-dia. disk. The disk was then press-bonded onto a 21 mm-dia. circular shaped net of stainless steel to form a positive electrode containing about 40 mg of the carbonaceous material. On the other hand, a negative electrode was prepared by stamping a 1 mm-thick sheet of lithium metal into a 21 mm-dia. disk.

The thus-prepared positive and negative electrodes were disposed opposite to each other with a porous polypropylene film as a separator disposed therebetween, and the resultant structure was dipped in an electrolytic solution comprising a 1:1 (by volume)-mixture solvent of propylene carbonate and dimethoxyethane and $LiClO_4$ dissolved therein at a rate of 1 mol/liter, thereby forming a non-aqueous solvent-type lithium secondary battery.

In the lithium secondary battery thus constituted, the carbonaceous material in the positive electrode was subjected to doping and dedoping of lithium to evaluate capacities therefor.

More specifically, the doping was effected by repeating a cycle including 1 hour of current conduction at a current density of 0.5 mA/cm$^2$ and 2 hours of pause until the equilibrium potential between the positive and negative electrodes reached 5 mV. The electricity thus flowed was divided by the weight of the carbonaceous material to provide a doping capacity (A) in terms of Ah/kg. Then, in a similar manner, a current was flowed in a reverse direction to dedope the lithium from the doped carbonaceous material. The de-doping was effected by repeating a cycle including 1 hour of current conduction at a current density of 0.5 mA/cm$^2$ and 2 hours of pause, down to a cut-off voltage of 1.5 volts. The electricity thus flowed was divided by the weight of the carbonaceous material to provide a dedoping capacity (B) in terms of Ah/kg. Then, a non-dedoping capacity (A-B) was calculated as a difference between the doping capacity (A) and the dedoping capacity (B), and a discharge efficiency (%) was obtained by dividing the dedoping capacity (B) with the doping capacity (A) and multiplying the quotient (B/A) with 100. The discharge efficiency is a measure of effective utilization of the active substance.

The performances of the lithium secondary batteries using positive electrodes of the respective carbonaceous materials measured in the above-described manner are summarized in the following Table 2.

In view of Table 2, it is understood that the secondary batteries prepared by using the carbonaceous materials according to Examples of the present invention showed larger values in both doping capacity (A) and de-doping capacity (B) and also remarkably small non-dedoping capacities (A-B) determined as differences therebetween, so that the carbonaceous materials of the present invention allow effective utilization of cell active substance.

Secondary batteries obtained by using carbonaceous materials of Comparative Examples 1, 2 and 4 showed large doping capacities but also showed very large non-dedoping capacities, thus having a disadvantage that lithium as the active substance was not effectively utilized.

A secondary battery obtained by using the carbonaceous material of Comparative Example 3 showed doping capacity and dedoping capacities which were both very small.

As described above, according to the present invention, there is provided a carbonaceous electrode material having well-balanced performances including a small non-dedoping capacity and a large dedoping capacity in combination. Such a carbonaceous material can be easily produced by carbonizing an organic material of plant origin as a starting material under appropriate conditions. By using an electrode, particularly a negative electrode, prepared by using the carbonaceous material according to the present invention, it becomes possible to provide a non-aqueous solvent-type secondary battery having large charge-discharge capacities and a large active substance-utilization efficiency.

Table 1

| | Starting material | Carbonization temp. (°C) | $d_{002}$ (nm) | H/C | Pore volume (ml/g) | Specific surface area (m$^2$/g) |
|---|---|---|---|---|---|---|
| Ex. 1 | coconut shell | 1200 | 0.382 | 0.03 | 0.63 | 2.6 |
| 2 | coconut shell | 1300 | 0.368 | 0.02 | 0.59 | 3.9 |
| 3 | coconut shell | 1200 | 0.377 | 0.03 | 0.62 | 4.5 |
| 4 | coffee bean | 1200 | 0.370 | 0.03 | 0.60 | 2.9 |
| 5 | coffee bean | 1100 | 0.380 | 0.04 | 0.67 | 3.2 |
| 6 | coffee bean | 1100 | 0.381 | 0.04 | 0.65 | 3.0 |
| Comp. Ex. 1 | phenolic resin | 1200 | 0.377 | 0.02 | 0.42 | 1.0 |
| 2 | furan resin | 1200 | 0.379 | 0.02 | 0.45 | 1.2 |
| 3 | petroleum pitch | 1200 | 0.355 | 0.01 | 0.38 | 1.7 |
| 4 | coconut shell active carbon | 1200 | 0.349 | 0.03 | 1.05 | 1270 |

Table 2: Secondary battery performances

| | Doping capacity (A) (Ah/kg) | Dedoping capacity (B) (Ah/kg) | Non-dedoping capacity (A-B) (Ah/kg) | Discharge efficiency (A-B)/Ax100 (%) |
|---|---|---|---|---|
| Ex. 1 | 543 | 438 | 105 | 80.5 |
| 2 | 427 | 345 | 82 | 80.8 |
| 3 | 457 | 352 | 105 | 77.0 |
| 4 | 507 | 413 | 94 | 81.5 |
| 5 | 575 | 430 | 145 | 74.8 |
| 6 | 500 | 370 | 130 | 74.0 |
| Comp. Ex. 1 | 534 | 291 | 243 | 54.5 |
| 2 | 681 | 428 | 253 | 62.8 |
| 3 | 336 | 278 | 58 | 82.7 |
| 4 | 616 | 350 | 266 | 56.8 |

## Claims

1. A carbonaceous electrode material for a non-aqueous solvent-type secondary battery, obtained by carbonizing an organic material of plant origin, and having a pore volume of at least 0.55 ml/g of pores having a pore diameter of at most 5 µm as measured by mercury injection method and a specific surface area of at most 100 $m^2$/g as measured by the nitrogen adsorption BET method.

2. A carbonaceous electrode material according to Claim 1, wherein the organic material is a member selected from the group consisting of coffee bean, chaffs, broadleaf tree wood, conifer wood, and bamboo.

3. A carbonaceous electrode material according to Claim 1 or 2, having an average (002)-plane spacing of at least 0.365 nm as measured by X-ray diffraction method.

4. A process for producing a carbonaceous electrode material for a non-aqueous solvent-type secondary battery, comprising: carbonizing an organic material of plant origin in contact with a flowing inert gas at a temperature of 700 - 1500 °C under a pressure exceeding 10 kPa.

5. A process according to Claim 4, wherein the organic material is piled in a layer and the inert gas is caused to flow in parallel with the layer.

6. A process according to Claim 5, wherein the organic material is caused to form a bed, and the inert gas is caused to flow through the bed.

7. A process according to Claim 6, the organic material forms a fluidized bed under the action of the flowing inert gas.

8. A process according to Claim 6 or 7, wherein the inert gas is caused to flow at a rate of at least 10 ml/min. per gram of the organic material to be carbonized.

9. A process according to any one of Claims 4 - 7, wherein the organic material is pre-calcined and pulverized to an average diameter of at most 100 µm prior to the carbonization.

10. An electrode structure for a non-aqueous solvent-type secondary battery, comprising: an electroconductive substrate and a composite electrode layer disposed on at least one surface of the electroconductive substrate; said composite electrode layer comprising a carbonaceous electrode material according to any one of Claims 1 - 3 in a particulate form, and a binder.

11. A non-aqueous solvent-type secondary battery, comprising, a positive electrode, a negative electrode, and a separator and a non-aqueous electrolytic solution disposed between the positive and negative electrodes; at least one of said positive and negative electrodes comprising an electrode structure according to Claim 10.

12. A secondary battery according to Claim 11, wherein the electrode structure constitutes the negative electrode.

## Patentansprüche

1. Ein kohlenstoffartiges Elektrodenmaterial für eine auf der Basis eines nichtwäßrigen Lösungsmittels arbeitende Sekundärbatterie, erhalten durch Karbonisieren eines organischen Materials pflanzlichen Ursprungs und aufweisend ein Porenvolumen von mindestens 0,55 ml/g Poren mit einem Porendurchmesser von höchstens 5 µm, gemessen durch das Quecksilberinjektionsverfahren, und einen spezifischen Oberflächenbereich von höchstens 100 $m^2$/g, gemessen durch das Stickstoffanlagerungsverfahren nach Brunauer, Emmett und Teller (BET-Verfahren).

2. Kohlenstoffartiges Elektrodenmaterial nach Anspruch 1, wobei das organische Material ein Glied der Gruppe bestehend aus Kaffeebohne, Häcksel, Laubbaumholz, Nadelbaumholz und Bambus ist.

3. Kohlenstoffartiges Elektrodenmaterial nach Anspruch 1 oder 2, mit einem durchschnittlichen (002)-Planarebenen-Abstand (Zwischenschichtabstand) von mindestens 0,365 nm, gemessen gemäß der Röntgenbeugungsmethode.

**EP 0 767 505 B1**

**4.** Verfahren zum Herstellen eines kohlenstoffartigen Elektrodenmaterials für eine auf der Basis eines nichtwäßrigen Lösungsmittels arbeitende Sekundärbatterie, aufweisend: das Karbonisieren eines organischen Materials pflanzlichen Ursprungs in Berührung mit einem strömenden Inertgas bei einer Temperatur von 700 - 1500°C unter einem Druck von über 10 kPa.

**5.** Verfahren nach Anspruch 4, wobei das organische Material in einer Schicht gestapelt wird und das Inertgas veranlaßt wird, parallel zu der Schicht zu strömen.

**6.** Verfahren nach Anspruch 5, wobei das organische Material veranlaßt wird, ein Bett zu bilden, und das Inertgas veranlaßt wird, durch das Bett zu strömen.

**7.** Verfahren nach Anspruch 6, wobei das organische Material unter der Einwirkung des strömenden Inertgases ein Fließbett bildet.

**8.** Verfahren nach Anspruch 6 oder 7, wobei das Inertgas veranlaßt wird, mit einer Geschwindigkeit von mindestens 10 ml/min pro Gramm des organischen zu karbonisierenden Materials zu strömen.

**9.** Verfahren nach einem der Ansprüche 4 bis 7, wobei das organische Material vor der Karbonisierung vorkalziniert und auf einen durchschnittlichen Durchmesser von höchstens 100 µm pulverisiert wird.

**10.** Elektrodenstruktur für eine auf der Basis eines nichtwäßrigen Lösungsmittels arbeitende Sekundärbatterie, aufweisend: ein stromleitendes Substrat und eine aus einem Verbundwerkstoff bestehende Elektrodenschicht, die auf mindestens eine der Oberflächen des stromleitenden Substrats aufgebracht ist;
wobei die aus einem Verbundwerkstoff bestehende Elektrodenschicht ein kohlenstoffhaltiges Elektrodenmaterial gemäß irgendeinem der Ansprüche 1 bis 3 in Teilchenform und ein Bindemittel enthält.

**11.** Eine auf der Basis eines nichtwäßrigen Lösungs-mittels arbeitende Sekundärbatterie, welche die nachfolgend genannten Bestandteile enthält: eine positive Elektrode, eine negative Elektrode, einen Separator und eine nichtwäßrige Elektrolytlösung, die zwischen der positiven und der negativen Elektrode angeordnet ist;
wobei mindestens eine der beiden genannten positiven bzw. negativen Elektroden eine Elektrodenstruktur gemäß Anspruch 9 enthält.

**12.** Eine Sekundärbatterie gemäß Anspruch 11, wobei die Elektrodenstruktur die negative Elektrode aufbaut.

**Revendications**

**1.** Matière carbonée pour électrode destinée à un accumulateur de type à solvant non aqueux, obtenue par carbonisation d'une matière organique d'origine végétale, et ayant un volume de pores d'au moins 0,55 ml/g de pores ayant un diamètre de pore d'au plus 5 µm d'après mesure selon un procédé par injection de mercure, et une surface spécifique d'au plus 100 m$^2$/g d'après mesure selon le procédé BET par adsorption d'azote.

**2.** Matière carbonée pour électrode selon la revendication 1, dans laquelle la matière organique est choisie parmi les grains de café, la balle, les bois d'arbre à feuilles larges, les bois de conifère et le bambou.

**3.** Matière carbonée pour électrode selon la revendication 1 ou 2, ayant un intervalle moyen entre plans (002) d'au moins 0,365 nm d'après mesure selon un procédé par diffraction de rayons X.

**4.** Procédé de production une matière carbonée pour électrode destinée à un accumulateur de type à solvant non aqueux, comprenant : une carbonisation d'une matière organique d'origine végétale en contact avec un gaz inerte en circulation à une température de 700 à 1500 °C sous une pression supérieure à 10 kPa.

**5.** Procédé selon la revendication 4, dans lequel la matière organique est entassée en une couche, et on fait circuler le gaz inerte parallèlement à la couche.

**6.** Procédé selon la revendication 5, dans lequel on met la matière organique sous forme d'un lit, et on fait circuler le gaz inerte à travers le lit.

13

**7.** Procédé selon la revendication 6, dans lequel la matière organique forme un lit fluidisé sous l'action du gaz inerte en circulation.

**8.** Procédé selon la revendication 6 ou 7, dans lequel on fait circuler le gaz inerte à un débit d'au moins 10 ml/min par gramme de la matière organique destinée à être carbonisée.

**9.** Procédé selon l'une quelconque des revendications 4 à 7, dans lequel la matière organique est précalcinée et pulvérisée jusqu'à un diamètre moyen d'au plus 100 µm avant la carbonisation.

**10.** Structure d'électrode pour accumulateur de type à solvant non aqueux, comprenant : un substrat électroconducteur et une couche composite formant électrode disposée sur au moins une surface du substrat électroconducteur ;
ladite couche composite formant électrode comprenant une matière carbonée pour électrode selon l'une quelconque des revendication 1 à 3 sous forme particulaire, et un liant.

**11.** Accumulateur de type à solvant non aqueux, comprenant une électrode positive, une électrode négative, et un séparateur ainsi qu'une solution électrolytique non aqueuse disposés entre les électrodes positive et négative ;
au moins l'une desdites électrodes positive et négative comprenant une structure d'électrode selon la revendication 10.

**12.** Accumulateur selon la revendication 11, dans lequel la structure d'électrode constitue l'électrode négative.

F I G. 1

F I G. 2